# EUROPEAN PATENT APPLICATION

(11) **EP 3 418 047 A1**
(43) Date of publication of application: **26.12.2018**
(21) Application number: 16890634.5
(22) Date of filing: 26.10.2016
(51) Int. Cl.: B32B 5/00, B32B 7/02, B23B 35/00, B32B 5/12, B32B 5/26, B32B 5/28, B32B 7/12, B32B 15/14, B32B 15/20

(54) **LAMINATED BOARD AND METHOD FOR PROCESSING LAMINATED BOARD**

(30) Priority: 15.02.2016 JP 2016026261
(71) Applicant: Mitsubishi Heavy Industries, Ltd., Tokyo 108-8215 (JP)
(72) Inventor: KAMO, Sota, Tokyo 108-8215 (JP); TAKAGI, Kiyoka, Tokyo 108-8215 (JP); ISHIDA, Jun, Tokyo 108-8215 (JP); ABE, Toshio, Tokyo 108-8215 (JP); KONO, Akira, Tokyo 108-8215 (JP); SHIMIZU, Takayuki, Tokyo 108-8215 (JP); AZUSAWA, Naoto, Tokyo 108-8215 (JP)
(74) Representative: Henkel, Breuer & Partner
(86) International application number: PCT/JP2016/081693
(87) International publication number: WO 2017/141497

(57) **Abstract**

This laminated board 1 comprises: a difficult-to-machine layer 11 formed of a composite material including a fiber and a resin material; and a pair of hard layers 12 layered on both front and back surfaces of the difficult-to-machine layer 11 and formed of a hard material that is harder than the composite material of the difficult-to-machine layer 11. Each hard layer 12 is formed of a composite material including carbon fiber and a resin. The difficult-to-machine layer 11 and the pair of hard layers 12 are molded integrally. The resin included in the difficult-to-machine layer 11 and the resin included in the hard layer 12 are isogen - eic resins, and an epoxy resin is used.

## Description

### FIELD

The present invention relates to a laminated board and a method for processing a laminated board. Background

Conventionally, as a composite material, there is known a fiber-reinforced resin composite material which is formed from, in order from top down, a resin layer reinforced with nonwoven fabrics and a resin layer reinforced with unidirectionally aligned reinforced fibers obtained by unidirectionally aligning reinforced fibers and which is suitable for boring (see, for example, Patent Literature 1).

### Citation List

### Patent Literature

Patent Literature 1: Japanese Patent Application Laid-open No. 2004-338271

### Summary

### Technical Problem

In Patent Literature 1, the resin layer using nonwoven fabrics is formed on the top surface side, thus enabling boring with high quality using a cutting tool. However, for example, when a resin layer using fibers other than nonwoven fabrics is formed on the top surface side, the configuration in Patent Literature 1 makes it difficult to perform suitable cutting, which may result in forming delamination or the like on the top surface after the cutting.

Furthermore, a composite material using polyarylate-based fibers may be used as a composite material to be cut in some cases. The composite material using polyarylate fibers, which has characteristics of high strength and high elasticity, is a difficult-to-cut material that is difficult to process.

It is therefore an object of the present invention to provide a laminated board and a method for processing a laminated board that are capable of improving cutting workability.

### Solution to Problem

A laminated board according to the present invention includes a difficult-to-cut layer formed of a composite material including fibers and a resin material, and a hard layer laminated on at least one of a top surface and a bottom surface of the difficult-to-cut layer and formed of a hard material that is harder than the composite material.

The difficult-to-cut layer preferably includes polyarylate fibers as the fibers.

With this configuration, the difficult-to-cut layer made of a composite material using polyarylate fibers serving as a difficult-to-cut material can be pressed by the hard layer. Thus, when the composite material is cut from the hard layer side, the difficult-to-cut layer can be suitably cut while the occurrence of delamination in the difficult-to-cut layer is suppressed. Furthermore, the hard layer is harder than the difficult-to-cut layer, and hence the occurrence of delamination in the hard layer can be suppressed. Note that the hard layers may be formed on both top and bottom surfaces of the difficult-to-cut layer. Furthermore, for example, when a reinforced fiber composite material is used for the hard material, carbon fiber reinforced plastic (CFRP) or glass fiber reinforced plastic (GFRP) is used, and, for example, when metal is used for the hard material, an aluminum alloy is used.

The polyarylate fibers are preferably Vectran (registered trademark).

With this configuration, Vectran is used as the polyarylate fibers to form the difficult-to-cut layer having high strength and high elasticity, and hence damping property against vibration can be improved.

The hard layer is preferably formed of a composite material made of carbon fibers and a resin.

With this configuration, the composite material (CFRP) made of carbon fibers and a resin is used as the hard layer, and hence the occurrence of delamination in the hard layer can be well suppressed.

When the hard layer is formed of a composite material, the difficult-to-cut layer and the hard layer are preferably integrally molded.

With this configuration, the hard layer and the difficult-to-cut layer can be integrally molded, and hence the hard layer and the difficult-to-cut layer can be firmly bonded.

An adhesive layer provided between the difficult-to-cut layer and the hard layer to bond the difficult-to-cut layer and the hard layer, is preferably further included.

With this configuration, after the difficult-to-cut layer and the hard layer are separately molded, the difficult-to-cut layer and the hard layer can be bonded together with the adhesive layer.

When the hard layer is formed of a composite material, a resin included in the difficult-to-cut layer and a resin included in the hard layer are preferably resins of a same type.

With this configuration, the resins in the hard layer and the difficult-to-cut layer are resins of the same type, and hence the deformation at the time of thermal curing can be suppressed. Note that examples of the resin include an epoxy-based resin.

A plurality of the difficult-to-cut layers are dispersed such that the layers are preferably provided at predetermined intervals in a laminate direction.

With this configuration, the plurality of difficult-to-cut layers can be disposed dispersedly in the laminate direction, and hence the difference in rigidity between the difficult-to-cut layers and the hard layers can be prevented from being increased.

The plurality of the difficult-to-cut layers are preferably each provided such that fiber orientations of the fibers cross each other.

With this configuration, by making the fiber orientations of the plurality of difficult-to-cut layers different as appropriate, isotropic or anisotropic characteristics can be adjusted. Note that, for example, when the difficult-to-cut layers are formed of two layers, the fiber orientations of the plurality of difficult-to-cut layers may be made different from one another, such as ±45° and ±60°, with reference to a predetermined angle.

The difficult-to-cut layer and the hard layer are preferably formed as structures symmetric about a center in a laminate direction.

With this configuration, the difficult-to-cut layer and the hard layer are structured to be symmetric about the center in the laminate direction, and hence the deformation at the time of thermal curing can be suppressed.

A method according to the present invention is for processing a laminated board in which a difficult-to-cut layer is formed of a composite material including fibers and a resin material and in which a hard layer is laminated on at least one of a top surface and a bottom surface of the difficult-to-cut layer and is formed of a hard material that is harder than the composite material. The method includes cutting the laminated board in a state where the difficult-to-cut layer and the hard layer are laminated together.

With this configuration, the difficult-to-cut layer can be pressed by the hard layer, and hence the difficult-to-cut layer can be suitably cut while the occurrence of delamination in the difficult-to-cut layer is suppressed. Furthermore, the hard layer is harder than the difficult-to-cut layer, and hence the occurrence of delamination in the hard layer can be suppressed.

### Brief Description of Drawings

FIG. 1 is a sectional view illustrating an example of a laminated board according to Embodiment 1.
FIG. 2 is a perspective view illustrating a method for processing a laminated board according to Embodiment 1.
FIG. 3 is a sectional view illustrating an example of a laminated board according to a modification of Embodiment 1.
FIG. 4 is a sectional view illustrating an example of a laminated board according to Embodiment 2.

### Description of Embodiments

Embodiments of the present invention are described in detail below with reference to the drawings. Note that the present invention is not limited by the embodiments. Furthermore, the components in the following embodiments include those that can be easily replaced by persons skilled in the art or that are substantially equivalent. In addition, the components described below can be combined as appropriate, and when there are embodiments, the embodiments can be combined as well.

### Embodiment 1

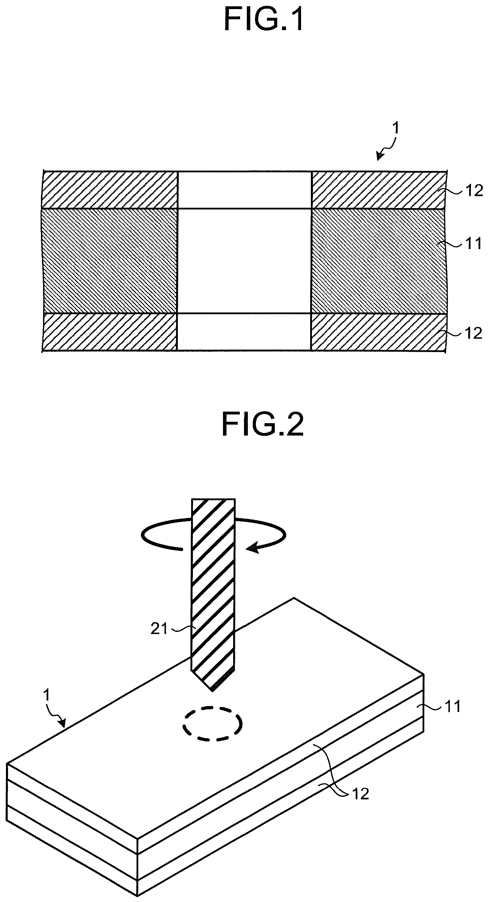

A laminated board according to Embodiment 1 is used, for example, to form an aircraft structure, and specifically, used for a skin (outer panel) of a wing body including a tail unit and a main wing of an aircraft. Referring to FIG. 1 and FIG. 2, a laminated board and a method for processing the laminated board are described below. FIG. 1 is a sectional view illustrating an example of the laminated board according to Embodiment 1, and FIG. 2 is a perspective view illustrating a method for processing the laminated board according to Embodiment 1.

As illustrated in FIG. 1, a laminated board 1 includes a difficult-to-cut layer 11 and a pair of hard layers 12 bonded on both top and bottom surfaces of the difficult-to-cut layer 11. The laminated board 1 is cut from the hard layer 12 side, and in Embodiment 1, the pair of hard layers 12 are provided on both top and bottom surfaces of the difficult-to-cut layer 11 such that the laminated board 1 can be cut from both top and bottom surfaces. Note that, in Embodiment 1, the pair of hard layers 12 are provided on both top and bottom surfaces of the difficult-to-cut layer 11, but the hard layer 12 may be provided on any one of the top surface and the bottom surface, and the configuration is not particularly limited.

The difficult-to-cut layer 11 is formed of a composite material including polyarylate fibers and a resin. Specifically, for example, as the polyarylate fibers, Vectran (registered trademark) is used; as the resin, an epoxy-based resin is used. The difficult-to-cut layer 11 formed with use of Vectran serves as a layer having high strength and high elasticity. The difficult-to-cut layer 11 may be formed of one ply (one layer) or may be formed of layers of two or more plies, and the configuration is not particularly limited. Furthermore, in Embodiment 1, polyarylate fibers are used, but any fiber with which the difficult-to-cut layer 11 having high strength and high elasticity is formed can be used.

The pair of hard layers 12 are formed with use of hard material harder than the material of the difficult-to-cut layer 11, and CFRP, which is a composite material including carbon fibers and a resin, is used as the hard material. Note that, in Embodiment 1, the hard layer 12 is formed from CFRP, but another kind of fiber-reinforced plastic may be used, and, for example, GFRP may be used. Furthermore, as the resin of each hard layer 12, specifically, an epoxy resin, which is a resin of the same type as the resin used in the difficult-to-cut layer 11, is used.

Then, the difficult-to-cut layer 11 and the pair of hard layers 12 are integrally molded. Specifically, carbon fibers impregnated with uncured resin are disposed on both top and bottom surfaces of polyarylate-based fibers impregnated with uncured resin, and then these are integrated together. Then, the integrated body of the difficult-to-cut layer 11 and the pair of hard layers 12 is subjected to thermal treatment such that the resin is thermally cured to mold the laminated board 1.

The laminated board 1 formed as described above is formed such that the structures on both top and bottom sides in the laminate direction are symmetric about a center line passing through the center in the laminate direction (thickness direction). Thus, when the resins are thermally cured, the top surface side of the laminated board 1 and the bottom surface side of the laminated board 1 displace to the same degree, and hence the deformation of the laminated board 1 can be suppressed.

Next, a processing method for cutting the above-mentioned laminated board 1 is described with reference to FIG. 2. Note that, the case where the laminated board 1 is bored is described with reference to FIG. 2. In the processing method for the laminated board 1, a boring tool 21 is used to perform a boring process on the laminated board 1 in which the difficult-to-cut layer 11 and the pair of hard layers 12 are laminated together from the hard layer 12 side. The boring tool 21 is used to first cut the hard layer 12 on the top surface side, subsequently cut the difficult-to-cut layer 11, and then cut the hard layer 12 on the bottom surface side, thereby forming a through hole in the laminated board 1.

As described above, according to Embodiment 1, the difficult-to-cut layer 11 made of composite material using polyarylate fibers serving as a difficult-to-cut material can be pressed by the pair of hard layers 12 from both sides, and hence by cutting the laminated board 1 from the hard layer 12 side, the difficult-to-cut layer 11 can be suitably cut while the occurrence of delamination in the difficult-to-cut layer 11 is suppressed. Furthermore, the hard layer 12 is harder than the difficult-to-cut layer 11, and hence the occurrence of delamination in the hard layer 12 can be suppressed. In this manner, cutting workability for the laminated board 1 can be improved.

Furthermore, according to Embodiment 1, Vectran is used as the polyarylate fibers to form the difficult-to-cut layer 11 having high strength and high elasticity, and hence damping property against vibration of the laminated board 1 can be improved.

Furthermore, according to Embodiment 1, the composite material (CFRP) made of carbon fibers and a resin is used as the hard layer 12, and hence the occurrence of delamination in the hard layer 12 can be well suppressed.

Furthermore, according to Embodiment 1, the hard layer 12 and the difficult-to-cut layer 11 can be integrally molded, and hence the hard layer 12 and the difficult-to-cut layer 11 can be firmly bonded.

Furthermore, according to Embodiment 1, the resins in the hard layer 12 and the difficult-to-cut layer 11 are resins of the same type, and hence the deformation at the time of thermal curing can be suppressed.

Furthermore, according to Embodiment 1, the difficult-to-cut layer 11 and the hard layers 12 are structured such that the structures on both top and bottom sides are symmetric about the center in the laminate direction, and hence the deformation of the laminated board 1 when thermally cured can be suppressed.

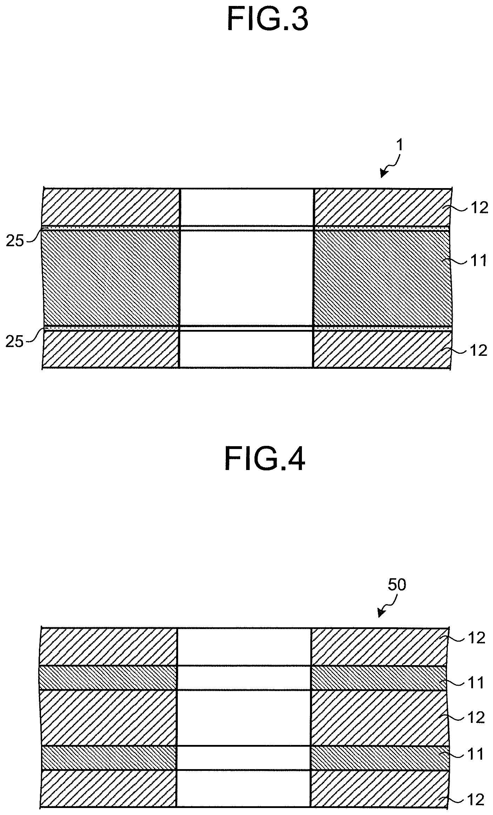

Note that, in Embodiment 1, the difficult-to-cut layer 11 and the hard layer 12 are integrally molded, but the laminated board 1 may be formed as one illustrated in FIG. 3. Specifically, the difficult-to-cut layer 11 and the hard layer 12 may be separately molded, and the molded difficult-to-cut layer 11 and the molded hard layer 12 may be bonded together with an adhesive layer 25 interposed therebetween. Then, the bonded laminated board 1 is bored with the boring tool 21. The difficult-to-cut layer 11 in the processed laminated board 1 may be used after the hard layer 12 is peeled off, or the processed laminated board 1 may be used in the state in which the hard layer 12 and the difficult-to-cut layer 11 are laminated together.

Furthermore, in Embodiment 1, fiber reinforced plastic is applied as a hard material used for the hard layer 12, but, for example, a metal material such as an aluminum alloy may be applied.

Furthermore, in Embodiment 1, boring is used as cutting, but any cutting can be applied, including a cutting process for cutting the laminated board 1, a cutting process not involving penetrating the laminated board 1, and a cutting process for trimming the side surface of the laminated board 1. Specifically, in Embodiment 1, the case where the laminated board 1 is cut from the hard layer 12 side has been described, but the laminated board 1 may be cut from the side surface, and the configuration is not particularly limited.

### Embodiment 2

Next, a laminated board 50 according to Embodiment 2 is described with reference to FIG. 4. FIG. 4 is a sectional view illustrating an example of the laminated board according to Embodiment 2. Note that, in Embodiment 2, different parts from those in Embodiment 1 are described in order to avoid duplicated descriptions, and parts having the same configurations as in Embodiment 1 are denoted by the same reference symbols for description.

As illustrated in FIG. 4, the laminated board 50 in Embodiment 2 includes a plurality of difficult-to-cut layers 11 and a plurality of hard layers 12, and the plurality of difficult-to-cut layers 11 are each disposed between the hard layers 12. In other words, the laminated board 50 has a structure in which the plurality of difficult-to-cut layers 11 are each interposed between the plurality of hard layers 12.

The plurality of difficult-to-cut layers 11 are dispersed such that a multiple number of layers (in Embodiment 2, for example, two layers) are arranged at predetermined intervals in the laminate direction. The two difficult-to-cut layers 11 are provided such that the fiber orientations of polyarylate fiber cross each other. Specifically, the two difficult-to-cut layers 11 are provided to have different fiber orientations of polyarylate fiber of ±45° with reference to the wing length direction of a wing body to which the laminated board 50 is applied. Note that the fiber orientations of polyarylate fiber in the two difficult-to-cut layers 11 are not limited thereto, and may be either ±60° or ±30°.

As described above, according to Embodiment 2, the plurality of difficult-to-cut layers 11 are arranged to be dispersed in the laminate direction, and hence the difference in rigidity between the difficult-to-cut layers 11 and the hard layers 12 can be prevented from being increased. Furthermore, by making the fiber orientations of the plurality of difficult-to-cut layers 11 different as appropriate, isotropic or anisotropic characteristics of the laminated board 50 can be adjusted. Specifically, by adjusting isotropic or anisotropic characteristics of the laminated board 1 depending on the structure of a wing body, the damping property against vibration having the laminated board 50 can be suited for the wing body. Consequently, the laminated board 50 can well suppress vibration of the wing body.

### Reference Signs List

- 1: laminated board
- 11: difficult-to-cut layer
- 12: hard layer
- 21: boring tool
- 25: adhesive layer
- 50: laminated board (Embodiment 2)

## Claims

1. A laminated board, comprising:
a difficult-to-cut layer formed of a composite material including fibers and a resin material; and
a hard layer laminated on at least one of a top surface and a bottom surface of the difficult-to-cut layer and formed of a hard material that is harder than the composite material.

2. The laminated board according to claim 1, wherein the difficult-to-cut layer includes polyarylate fibers as the fibers.

3. The laminated board according to claim 2, wherein the polyarylate fibers are Vectran (registered trademark).

4. The laminated board according to any one of claims 1 to 3, wherein the hard layer is formed of a composite material made of carbon fibers and a resin.

5. The laminated board according to any one of claims 1 to 4, wherein when the hard layer is formed of a composite material, the difficult-to-cut layer and the hard layer are integrally molded.

6. The laminated board according to any one of claims 1 to 4, further comprising an adhesive layer provided between the difficult-to-cut layer and the hard layer to bond the difficult-to-cut layer and the hard layer.

7. The laminated board according to any one of claims 1 to 6, wherein when the hard layer is formed of a composite material, a resin included in the difficult-to-cut layer and a resin included in the hard layer are resins of a same type.

8. The laminated board according to any one of claims 1 to 7, wherein a plurality of the difficult-to-cut layers are dispersed such that the layers are provided at predetermined intervals in a laminate direction.

9. The laminated board according to claim 8, wherein the plurality of the difficult-to-cut layers are each provided such that fiber orientations of the fibers cross each other.

10. The laminated board according to any one of claims 1 to 9, wherein the difficult-to-cut layer and the hard layer are formed as structures symmetric about a center in a laminate direction.

11. A method for processing a laminated board in which a difficult-to-cut layer is formed of a composite material including fibers and a resin material and in which a hard layer is laminated on at least one of a top surface and a bottom surface of the difficult-to-cut layer and is formed of a hard material that is harder than the composite material, the method comprising cutting the laminated board in a state where the difficult-to-cut layer and the hard layer are laminated together.
